Europäisches Patentamt

European Patent Office

Office européen des brevets

(11) Publication number: **0 382 267**

A1

# EUROPEAN PATENT APPLICATION

(21) Application number: 90200015.7

(51) Int. Cl.⁵: **B60J 1/14, B60P 3/32**

(22) Date of filing: 03.01.90

(30) Priority: 06.02.89 NL 8900287

(43) Date of publication of application:
16.08.90 Bulletin 90/33

(84) Designated Contracting States:
AT BE CH DE DK ES FR GB GR IT LI LU NL SE

(71) Applicant: POLYPLASTIC B.V.
Vlaardingweg 98
NL-3044 CK Rotterdam(NL)

(72) Inventor: 'T Hoen, Jan
Lyceumlaan 10
NL-3135 CX Vlaardingen(NL)

(74) Representative: de Bruijn, Leendert C. et al
Nederlandsch Octrooibureau
Scheveningseweg 82 P.O. Box 29720
NL-2502 LS 's-Gravenhage(NL)

(54) **Double-walled caravan window with fitting cap for fixing a setback hinge or lock.**

(57) A double-walled caravan window comprises a flat plastic sheet (2) which is bonded by its peripheral edge to a dish-shaped plastic sheet (3) whose peripheral edge is profiled so that it is stepped. The window has at least one fitting cap (10) for fixing a setback hinge or lock. In order to ensure that the fitting cap does not project relative to the plane of the shaped sheet, and in order to make it possible for the fitting cap to be fitted at the factory where the double-walled windows are made, in a part (7) of the stepped peripheral edge of the dish-shaped sheet (3) running parallel to the flat sheet (2) provision is made for a recess (11) extending to the flat sheet and bonded by its bottom in sealing fashion to the flat sheet. The fitting cap (10) is housed in the recess (11), while one or more hollow pins (12a, 12b) connected to the cap project through bores in the bottom of the recess and the flat sheet. The cap (10) is fixed by the locking rings (14) slid onto the end of the pins (12a, 12b).

fig-3

EP 0 382 267 A1

## Re: Doubled-walled caravan window with fitting cap for fixing a setback hinge or lock.

The invention relates to a double-walled caravan window, comprising a flat plastic sheet which is bonded by its peripheral edge to a dish-shaped plastic sheet whose peripheral edge is profiled so that it is stepped, and at least one fitting cap for fixing a setback hinge or lock.

Such a caravan window is generally known. In order to fit a setback hinge or lock on such a known window, corresponding holes are drilled in the peripheral edges of both plastic sheets, a fitting cap is placed on the window, and the setback hinge or lock is fixed by means of screws projecting through the drilled holes and fixed in or on the fitting cap. This design has two disadvantages:

1. The fitting cap projects relative to the plane of the shaped sheet on which it is fixed. This does not benefit the appearance of the window. This is a great disadvantage particularly if the stepped peripheral edge is to be sprayed in a colour.

2. The drilling of the holes and fitting of the fitting cap are carried out during fitting of the lock or setback hinge, i.e. not in the factory where the double-walled windows are made.

The object of the invention is to eliminate these disadvantages, and for this purpose the caravan window mentioned in the preamble is characterized in that in a part of the stepped peripheral edge of the dish-shaped sheet running parallel to the flat sheet provision is made for a recess extending to the flat sheet and bonded by its bottom in sealing fashion to the flat sheet, in that said fitting cap is housed in said recess, while one or more hollow pins connected to the cap project through bores in the bottom of the recess and the flat sheet, and in that the cap is fixed by locking rings slid onto the end of the pins.

The external surface of the cap and the external surface of said part of the stepped peripheral edge running parallel to the flat sheet are preferably approximately in line with each other.

In order to enhance the appearance, the external surface of the cap and the external surface of the stepped part can be provided with the same covering layer.

A cover plate (for example, of rubber or the like) is preferably clamped between the locking rings and the flat sheet.

If a setback hinge or lock is fixed on the cap, self-tapping screws which are screwed into the hollow pins of the fitting cap are used.

The invention will now be explained in greater detail with reference to the figures, in which an example of an embodiment is shown.

Fig. 1 shows a perspective view of a part of a caravan with window.

Fig. 2 shows a cross-section through a peripheral part of the double-walled caravan window.

Fig. 3 shows a cross-section along the line III-III in Fig. 2, part of the lock being shown by dashed and dotted lines.

The double-walled caravan window 1 shown comprises a flat plastic sheet 2 and a dish-shaped plastic sheet 3 (both usually made of methyl methacrylate). The dish-shaped sheet has a stepped peripheral edge with three slanting parts 4, 5 and 6 and three parts 6, 7 and 8 which run parallel to the flat sheet. The latter is bonded by its peripheral edge to the bottom face of the part 8.

For the fixing of setback hinges and/or locking elements, a number of fitting caps 10 are fixed on the window 1. A recess 11 is disposed on each fixing point of a fitting plate 10, in the part 4 of the peripheral edge of the dish-shaped sheet. The height of said recess corresponds to the distance (a) between the flat sheet 2 and the part 4. The bottom of the recess 11 rests on the flat sheet 2 and is bonded thereto.

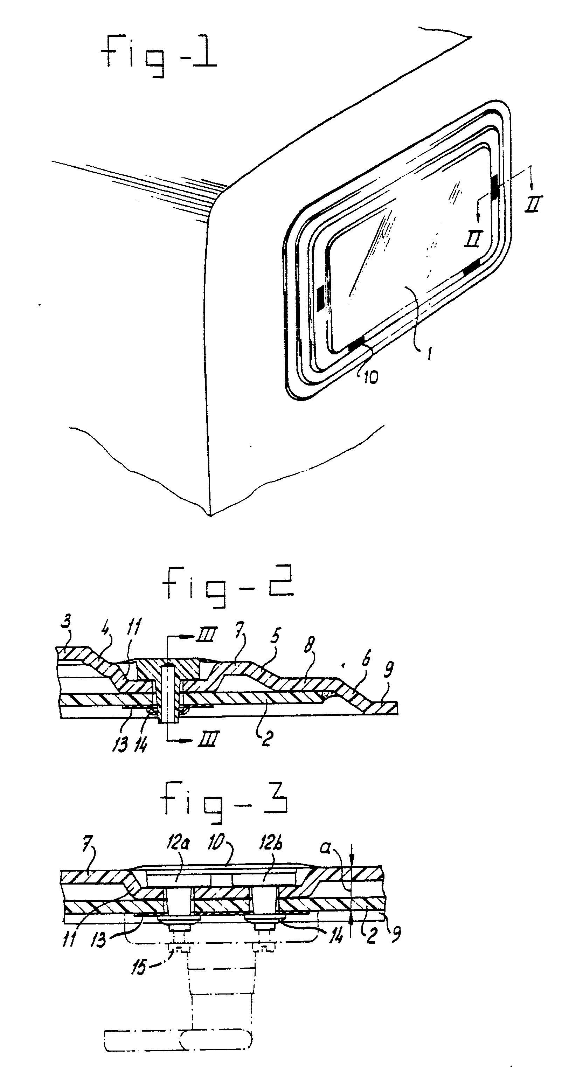

As Figs. 2 and 3 show, each fitting cap 10 is located in a recess 11 in such a way that the external face thereof coincides with the external face of the part 4.

Two hollow pins 12a, 12b are formed on the cap 10, each of them projecting through a drilled hole in the bottom of the recess 11 and into a rubber cover strip 13 in the flat sheet. A Starlock locking ring 14 is pushed onto the free end of each pin 12a, 12b. These Starlock rings cannot be slid off the pins 12a, 12b without being damaged.

The fitting of a fitting cap and fixing thereof by means of Starlock rings are carried out in the caravan window factory. In order to permit a lock part or setback hinge to be fitted on a fitting cap, self-tapping screws 15 have to be screwed into the bores of the pins, which has taken place in the illustration in Fig. 3. The lock is indicated by dashed and dotted lines here.

As Figs. 2 and 3 show, the fitting cap does not project outwards from the plane of the part 4. If the peripheral edge 4 to 9 of the dish-shaped sheet is sprayed in a colour or is provided with a coating in another way, the external face of the cap 10 can also be sprayed. Since the also sprayed external face of the cap does not project, the window has a streamlined appearance on the outside.

Various modifications are possible within the scope of the claims.

## Claims

1. Double-walled caravan window, comprising a flat plastic sheet which is bonded by its peripheral edge to a dish-shaped plastic sheet whose peripheral edge is profiled so that it is stepped, and at least one fitting cap for fitting a setback hinge or lock, characterized in that in a part (7) of the stepped peripheral edge of the dish-shaped sheet (3) running parallel to the flat sheet (2) provision is made for a recess (11) extending to the flat sheet and bonded by its bottom in sealing fashion to the flat sheet, in that said fitting cap (10) is housed in the recess (11), while one or more hollow pins (12a, 12b) connected to the cap (10) project through bores in the bottom of the recess and the flat sheet, and in that the cap (10) is fixed by locking rings (14) slid onto the end of the pins (12a, 12b).

2. Double-walled caravan window according to Claim 1, characterized in that the external face of the cap (10) and the external surface of said part of the stepped peripheral edge running parallel to the flat sheet are approximately in line with each other.

3. Double-walled caravan window according to Claim 2, characterized in that the external surface of the cap (10) and the external surface of the stepped part can be provided with the same covering layer.

4. Double-walled caravan window according to one of the preceding claims, characterized in that a cover plate (13) is clamped between the locking rings (14) and the flat sheet (2).

5. Double-walled caravan window according to one of the preceding claims, characterized in that a setback hinge or lock is fixed on the cap (10) by means of self-tapping screws (15) which are screwed into the hollow pins (12a, 12b).

# fig-1

# fig-2

# fig-3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 442 911 (A. STENGER)(05-06-1986) * Page 8, lines 12-27; figures 6-7 * | 1 | B 60 J 1/14 B 60 P 3/32 |
| A | US-A-3 822 462 (WINGFIELD)(07-07-1974) * Column 2, lines 36-55; figure 4 * | 1 | |

TECHNICAL FIELDS SEARCHED (Int. Cl.5)

B 60 J
B 60 P
E 06 B
E 05 D

The present search report has been drawn up for all claims

| Place of search | Date of completion of the search | Examiner |
|---|---|---|
| THE HAGUE | 27-04-1990 | LINTZ C.H. |

EPO FORM 1503 03.82 (P0401)